Europäisches Patentamt

European Patent Office

Office européen des brevets

(11) Publication number: **0 479 422 A2**

# EUROPEAN PATENT APPLICATION

(21) Application number: **91307316.9**

(22) Date of filing: **08.08.91**

(51) Int. Cl.5: **A63F 9/22**, A63G 31/00, G09B 9/00

(30) Priority: **24.08.90 US 572079**

(43) Date of publication of application:
**08.04.92 Bulletin 92/15**

(84) Designated Contracting States:
**CH DE FR GB LI**

(71) Applicant: **Hughes Aircraft Company**
**7200 Hughes Terrace P.O. Box 45066**
**Los Angeles, California 90045-0066(US)**

(72) Inventor: **Harvard, Albert F.**
**7866 Waterfall Circle**
**Huntington Beach, California 92648(US)**

(74) Representative: **Colgan, Stephen James et al**
**CARPMAELS & RANSFORD 43 Bloomsbury**
**Square**
**London WC1A 2RA(GB)**

(54) Theme park attraction for multiple participants using real time simulation.

(57) A real time interactive simulator system that involves a plurality of participants that cooperate to interactively achieve a predetermined objective. The system comprises a parallel computer processor and a plurality of video simulators coupled to the parallel processor. Each video simulator comprises an interactive video simulation that is displayed and incorporates selection devices such as joysticks and selection buttons that permit a plurality of participants to individually and cooperatively interact with the video simulation to achieve a predetermined objective. Each of the plurality of participants independently affects the achievement of the objective and the cooperation between participants is determinative of the achievement of the objective.

Fig. 4.

EP 0 479 422 A2

## BACKGROUND

The present invention relates to real-time, motion based simulators, and more particularly, to a real-time simulator system employing a microprocessor and a plurality of motion-based simulators that implement a number of scenarios, wherein multiple participants interact as a team with the system to achieve an objective for a team-selected scenario, and wherein each participant has an effect on the outcome.

Simulators have been employed in the past for the purposes of training military or civilian personnel to fly and otherwise operate aircraft, space vehicles, and ground and sea vehicles, and the like. In addition, simulator games have been designed that permit a single participant to interact with the simulator presentation to achieve a particular objective of the simulation.

However, to the applicant's knowledge, no existing simulator system provides a real-time system wherein multiple participants interact as a team with the system to achieve an objective for a team selected scenario, and wherein each participant has an effect on the outcome.

It is an objective of the present invention to provide a video game or simulator ride that permits interaction among family-friends-strangers to outwit a computer generated game as a team. Another objective of the invention is the provision for a theme park attraction that provides for real-time interaction of as many as three participants on a user-selectable video ride. A further objective of the invention is to provide a theme park attraction that will accommodate as many as 27 persons per hour per module or station.

## SUMMARY OF THE INVENTION

In accordance with these and other features and objectives of the invention, there is provided a real-time, interactive, motion-based, simulator system that involves a plurality of participants. The system comprises a microprocessor, herein referred to as a processor, and a plurality of motion-based simulator stations coupled to the processor. Each station is designed and cosmetically enhanced as a simulated armed space vehicle, for example, and comprises an interactive video simulation adapted for display and a means for permitting a plurality of participants to individually and cooperatively interact with a player-selectable video scenario to achieve a predetermined objective. The simulator system incorporates selection devices such as joysticks, yokes, CRT displays, and selection buttons and controls that permit interaction with the system in response to information from the scenarios presented on the video display. Each of the plurality of participants independently affects the achievement of the objective, and the cooperation between participants is determinative of the achievement of the objective.

## BRIEF DESCRIPTION OF THE DRAWINGS

The various features and advantages of the present invention may be more readily understood with reference to the following detailed description taken in conjunction with the accompanying drawings, wherein like reference numerals designate like structural elements, and in which:

FIG. 1 shows a fragmentary perspective view of an embodiment of a multiple participant simulator system constructed in accordance with the principles of the present invention;

FIG. 2 is a perspective view of an indicator and control unit for the simulator system shown in FIG. 1;

FIG. 3 is a plan view of an embodiment of a theme park attraction employing a plurality of the simulator systems shown in FIG. 1; and

FIG. 4 is a block diagram of the simulator system of FIG. 1 showing the interconnection of the components thereof.

## DETAILED DESCRIPTION

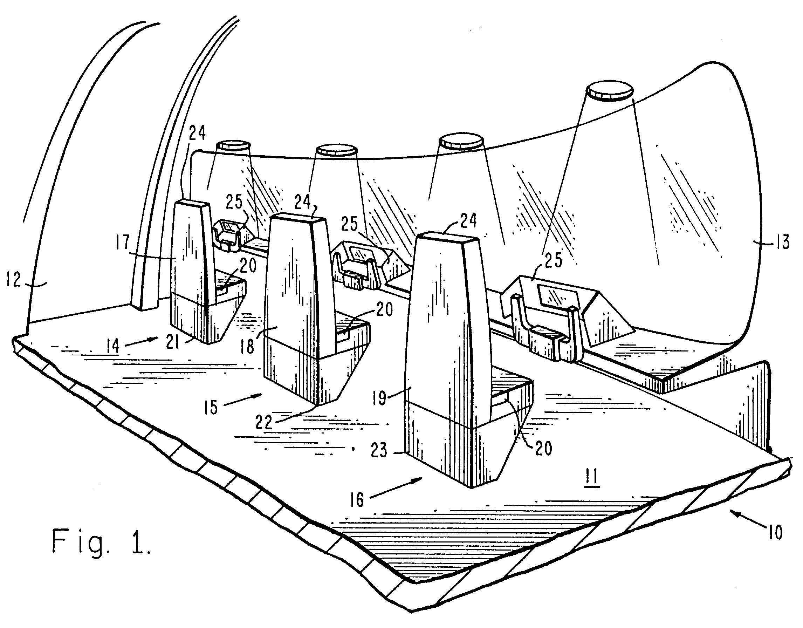

Referring now to FIG. 1, there is shown a perspective view of a simulator system 10 arranged in accordance with the principles of the present invention. The simulator system 10 comprises a separate unit or platform 11 mounted for movement by electromechanical shakers, vibrators and electrohydraulic actuators, for example. The platform 11 is mounted for six degrees of freedom and is enabled to simulate the dynamic movements of flight or the motion of the vehicle that the system 10 emulates. This type of mounting arrangement is well known, and is used in operational flight trainers and simulators such as those manufactured by Hughes Simulation Systems, Inc., 13775 McLearen Road, Herndon, VA 22071 and in simulators manufactured by others.

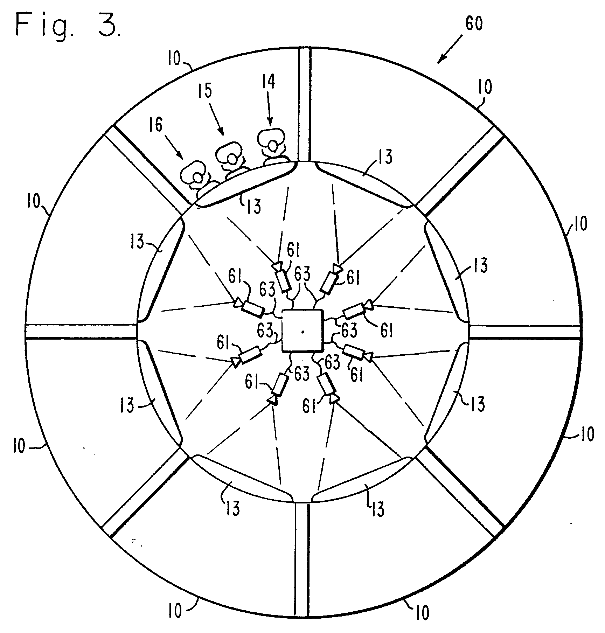

The platform 11 is decorated to simulate the appearance of a cabin or cockpit in a vessel or vehicle such as a spaceship, or the like, having a door 12 in one wall and a large display screen 13 along another wall. First, second and third crew stations 14, 15, 16 are provided, each of the crew stations 14, 15, 16 having a seat 17, 18, 19. The three seats 17, 18, 19 face the display screen 13 so that the occupants of the seats 17, 18, 19 are able to view an interactive display presented on the display screen 13 by an image generating system (shown in Fig. 3) positioned behind the screen 13. Each of the seats 17, 18, 19 is furnished with switch means 20 such as a pressure sensitive switch or a seat belt switch for initiating an electrical or electronic signal indicating the presence of an occupant therein.

The seats 17, 18, 19 are equipped with seat motion devices 21, 22, 23 which are adapted to provide vibration, roll, pitch, lateral motion and vertical motion to occupants of the seats 17, 18, 19. If desired, the seat motion devices 21, 22, 23 may be Motion Master ride simulator devices manufactured by OMNI Films International, Inc., P.O. Box 5807, Sarasota, Florida 34277. These devices provide four axis, eight directional movement that simulate complex gravitational forces such as those produced by a roller coaster, a jet aircraft or a race car, for example. The seats 17, 18, 19 are also equipped with audio means 24 for providing voice communication between occupants of the seats 17, 18, 19 and for providing sound effects. The audio means 24 are built into the seats 17, 18, 19 thus avoiding the necessity for the occupants to wear headsets or microphones, although these could be employed, if desired. The audio means 24 may be of a multi-channel, stereophonic, surround-sound type such as supplied by the Industrial Electronics Group of Hughes Aircraft Company ,or by others, if desired. Where appropriate to the scene displayed on the display screen 13, explosions for example, may be heard as sound effects via the audio means 24 as well as felt by way of motions communicated by the seat motion devices 21, 22, 23. Each of the crew stations 14, 15, 16 is also provided with an indicator and control unit 25, which will be described in more detail below.

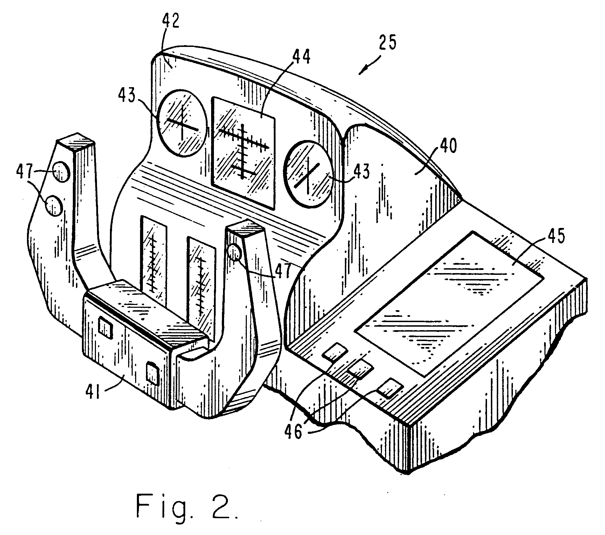

Referring now to FIG. 2, the indicator and control unit 25 comprises a console 40 and a yoke 41. The console 40 is provided with an instrument panel 42 having instruments 43 and indicators 44. The console 40 is also provided with a CRT display 45 and controls 46. The indicator and control unit 25 is configurable when the scenario is selected, and its configuration is different for each of the crew stations 14, 15, 16. The first crew station 14 is the navigator's station and the navigator's console 40 is dedicated to instruments 43 and controls 46 pertaining to navigation and target location and engagement. The second crew station 15 is the captain's station, and his console 40 is dedicated to instruments 43 and controls 46 pertaining to operation of the simulated vehicle, such as indications of course, fuel and speed, for example. The third crew station 16 is the weapons officer's station and his console 40 is dedicated to target acquisition, weapons status, weapons arming and firing and munitions count.

The yokes 41 at each of the crew stations 14, 15, 16, although physically the same, are functionally different for each selected crew position. Each yoke 41 may be pushed forward and pulled back and also rotated. Each yoke 41 is provided with thumb pushbuttons 47. The yoke 41 at the first or navigator's crew station 14 controls target location by moving a target locator box left or right or up or down. It also provides target lock and transfer of control to the captain. The yoke 41 at the second or captain's crew station 15 increases or reduces speed of the simulated vehicle and executes maneuvers such as nose down, nose up, turn left, turn right. The yoke 41 at the third or weapon's officer's crew station 16 controls the target acquire box in motion left, right, nose up, nose down. The pushbuttons 47 fire the simulated weapons such as missiles, rockets, lasers and guns. The indicator and control units 25 may be of the type used in operational flight trainers and simulators, such as manufactured by Hughes Simulation Systems, Inc., or by others.

FIG. 3 is a plan view of a theme park attraction 60 having eight simulator systems 10 arranged as sectors in a circular arrangement. For purpose of convenience, only one of the simulator systems 10 is shown having the three crew stations 14, 15, 16 facing the display screen 13. A projector 61 is located behind each of the display screens 13 and is adapted to project an interactive display on the screens 13 that is viewable from the crew stations 14, 15, 16. The projectors 61 are connected to a central processing unit 62 by means of cables 63.

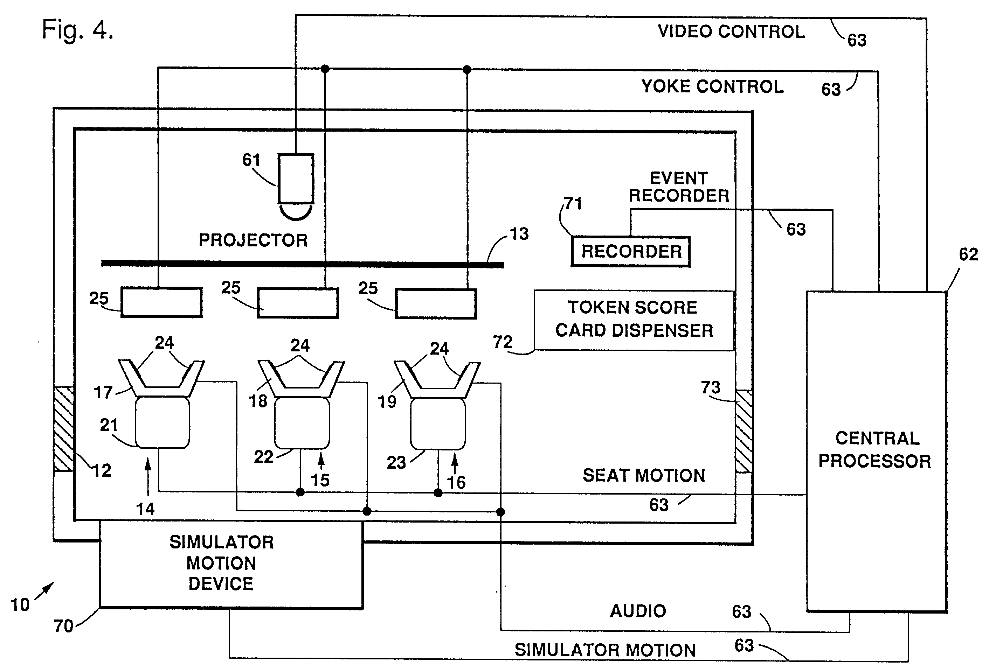

FIG. 4 is a block diagram showing the interconnection of the elements comprising the simulator system 10 of the present invention. A simulator motion device 70 is shown mechanically connected to the platform 11. An event recorder 71 is adapted to display the score achieved on the video game, and a token/score card dispenser 72 is provided, and is located near an exit 73. As indicated in FIG. 4, all of the various signals go to and come from the central processing unit 62, which is preferably a parallel processing computer. The processing unit 62 may be any of the commercially available processors currently used in operational simulators suitably modified to simultaneously service a plurality of simulator systems 10. This parallel processor along with digital signal processor circuit boards normally used for operational flight trainers and simulators is adapted to provide fast-moving, realistic real-time, interactive displays. The image generation system uses polygon display techniques. Hughes Simulation Systems, Inc., 2200 Arlington Downs Road, Arlington, Texas 76011, makes a system known as MICROPOLY II. It is a low-cost, high-performance computer image generation system designed to provide realistic simulator images. Another computer image generation system is provided by General Electric known as ComuScene.

It is a feature of the present invention to provide a real-time, interactive, multiple participant simulator ride that portrays a video story to a group of players, each of which can affect the outcome of the game. The invention comprises a video ride that provides for real-time interaction of as many as three participants, and provides a user-selectable video ride. A further advantage of the invention is the use of a central parallel processor to service a plurality of simultaneously running simulation systems 10, so as to be suitable for operation as an amusement park attraction. The attraction is the interaction among family, friends, or strangers to outwit a computer-generated game as a team. Because each of the players can interactively affect the outcome of the game, the outcome is different each time the game is played. It should be understood that although each of the players has a similar set of instruments and controls in front of him, they each perform different functions.

The following is an example of how the multiple participants may interact to affect the outcome of the game. The players enter the door 12 select a seat 17, 18, 19 and fasten a seat belt. The switch means 20 detects the player's presence and sends a signal to the central processing unit 62. If one of the crew stations 14, 15, 16 is not filled, that fact is registered by the central processing unit 62 which defaults the navigation position to the weapons officer position and assesses a scoring penalty for lack of a full team. Personnel assignments as captain, navigator or weapons officer are displayed on the screen 13. From the audio means 24 comes the following message: "Captain select your destination." Seven scenarios, for example, are displayed on the screen and the captain can select the destination of his choice by pressing the thumb push-button 47 on his yoke 41.

In the following example, the screen 13 shows the following: Time Zone Selection: Prehistoric Time. Player's assignments remain on the screen 13 throughout the entire event. The platform 11 and seats 17, 18, 19 shake and a loud roar and woosh sound are heard over the audio means 24. As an example, the following typical narration may be heard: "Welcome. You are about to land in a time zone of prehistoric adventure. Your mission will be to save yourself and your crew members. You have three devices to work with: cannons, lasers and the ability to escape by using the thrust of the ship. Remember, to score high you must use your weapons and fuel carefully. Good luck."

Setting: Prehistoric. Visuals on the display screen 13 display prehistoric creatures in aggressive behavior. Environment is life threatening with surface eruptions, fire storms, opening fissures, and active bogs and quick sand pits. Opening event: The spaceship lands on edge of a bog. The players see the background as described above. A dinosaur witnesses the landing and turns and starts toward spaceship. A pterodactyl flys overhead and frequently disappears. Creature noises accompany the action. During the following action, it will be understood that each crew station 14, 15, 16 controls a different aspect of the situation, and monitors different parameters. If the players at all crew stations 14, 15, 16 cooperate optimally, a high score may be achieved.

| SCENE/ACTION | PLAYERS ACTION | RESULTING ACTION |
|---|---|---|
| 1. Dinosaur attacks | Fire laser 11 times | Successful kill. Go to step 5. |
| | Laser misses 4 times | Dinosaur knocks ship into a bog. Go to step 2. |
| 2. Simulator tips, and noise accompanies this, indicating the ship is being sucked into the bog. Cabin alerts warn players of impending doom. | Fire engines | Successful escape. Go to step 5. |
| 3. Ship rises from bog and is attacked by Pterodactyl. | Fire Laser | Minimum effect, shots pass through wings, attack continues, ship headed for bog again, two more Pterodactyls are seen approaching. Go to step 4. |
| | Fire cannons 3 times others leave. | Pterodactyl destroyed, Go to step 5. |
| 4. Bog continues to swallow ship, gases heard in cabin, alarms sound for life support failures. | Fire engines max fuel used. | Ship emerges Go to step 5 |
| 5. Portray next scene and events to continue the simulation. | To be determined by the participants | To be determined by the system |

The foregoing scenario may be implemented as a 4 to 6 minute simulator ride, for example, where the participants interact with the drama portrayed on the screen 13. There may be variable endings to each of the scenarios, even where the participants do not achieve the desired objective. At the end of the game, the score is announced, the players unbuckle their seat belts and leave by way of the exit 73. As they pass the token/score card dispenser 72, a token and score card are dispensed.

In the present embodiment, the simulator system 10 provides for a team consisting of a Captain, a Target Locater or Navigator, and a Weapons Officer. Each role is as important as the other and allows for independent contribution by each of the participants to achieve the objective of the particular chosen scenario. Individual assignments for each of the roles are tailored to the appropriate scenario as follows:

Captain: The captain steers, or otherwise manipulates the vehicle in response to commands and instructions of the other participants and what is viewed on the screen 13. The captain selects courses and destinations. The captain chases targets and maneuvers to permit the weapons officer to engage the enemy. The captain controls the steering motion of the vehicle. The captain responds to the navigator in destination reselection, or changes from friendly environments to hostile ones.

Target Locater or Navigator: From various display formats, the navigator selects targets of opportunity or those exercising hostile movements and transfers data for viewing by the captain to assist in maneuvers and course changes. The navigator and captain interact through the audio means 24 and communicate simulated target data and real-time surroundings to other participants.

Weapons Officer: The weapons officer communicates with the captain and the navigator through the audio means 24. He receives target information from the captain and engages the targets in battle. He confirms engagements and is alerted if the vehicle is under attack from hostile forces not displayed on the screen 13. He has multiple engagement capabilities. He is responsible for the determining the correct engagement and for weapons conservation which is used to calculate the team's score.

The interconnection of the central processing unit 62, the indicator and control units 25, the motion devices 23, 70, and the projector 61 is accomplished in a well known manner by those skilled in the art and is not described in detail herein. The stories associated with the scenarios is a product developed by those skilled in video game story development and is not described in detail herein. The scenario selection is representative of any of a number of stories that are applicable to an interactive video game.

Each participant has a similar interactive indicator and control unit 25 but each is specified by the assignment selected by the participants as follows:

Captain: The yoke 41 controls the simulator in four degrees of freedom. Up/down (vertical movement) is not a discretionary selection by the crew and is reserved as a feature of the scenario such as crashes and landings, or impacts from hostile actions. The captain has a viewing reticle as part of the display 45 and uses it for target alignment and course selection. The captain's console 40 displays fuel and speed. A single button 47 on the yoke 41 allows speed changes. The captain selects the scenario to be played through a button 47 on the yoke 41. The captain has 30 seconds to perform scenario selection.

Navigator: The yoke 41 steers a target locator box that is used to surround a target, and a button 47 is provided for transfer to the captain for maneuvers which allows the weapons officer to engage the target. A second button 47 allows target lock for transfer to the captain. The navigator is responsible for keeping the captain on course for the completion of the mission. This is accomplished through use of a course destination reticle positioned by the navigator.

Weapons Officer: The weapons officer receives target information from the captain and engages the targets in battle. His yoke 41 moves an engagement box around the target. Buttons 47 on the yoke 41 allow firing of munitions or lasers. Laser pulses and munitions are counted and weapons conservation is the weapons officer's responsibility and is a feature of the score. A weapons count is displayed on the console 40 and on the screen 13 above the weapons officer and the captain.

Scoring is based on the ability of each player to collectively overcome the obstacles and satisfy the mission. In the present example, the score depends on number of successful shots, successful escapes, target detection, and weapon and fuel conservation. These together are measured against a maximum possibility for the time allowed for each scenario and a score based on 1000 is calculated as follows:

| SUCCESS TYPE | SCORE | AWARD |
|---|---|---|
| COMPLETE | 1000-850 | GOLD TOKEN |
| PARTIAL | 849-650 | SILVER TOKEN |
| INCOMPLETE | 649-400 | BRONZE TOKEN |
| FAILURE | <400 | NONE |

In the event that all team member positions are not filled, the navigator position defaults to the weapons officer position as detected by an interlock mechanism comprising switch means 20, for example. However, scoring is penalized and a score can not be greater that 849.

There is advantage to the queue of players waiting for this attraction. For theme parks the queue is an opportunity to present a preview to the participants on the variation of scenarios, the obstacles, and the mission. Entertainment value of the queue is left to those expert in this field and is not part of the invention.

Thus there has been described a new real-time, interactive video, motion-based simulator system employing a central processor and a plurality of simulators, video displays and sound systems that implement a number of scenarios, and wherein multiple participants interact as a team with the system to achieve an objective for a selected scenario and each participant has an effect on the outcome. It is to be understood that the above described embodiment is merely illustrative of some of the many specific embodiments which represent applications of the principles of the present invention. Clearly, numerous and other arrangements can be readily devised by those skilled in the art without departing from the scope of the invention.

**Claims**

1. A real time interactive game involving a plurality of participants, said game comprising:
   a computer processor; and
   a plurality of video simulator systems coupled to said processor;
   each video simulator system comprising an interactive video simulation adapted for display by the simulator and means for permitting a plurality of participants to individually and cooperatively interact with the video simulation to achieve a predetermined objective and wherein each of the plurality of participants independently affects the achievement of the objective.

2. The real time interactive game of Claim 1 wherein each video simulator system comprises:

an image projector coupled to the processor for displaying video images in response to the computer generated video simulation;

video display adapted to display the video image projected by the image projector;

a motion-based simulator coupled to the central processor that is adapted to interactively respond to the computer generated video simulation and to actions of the plurality of participants that operate the simulator; and

a motion control device coupled to the processor and to the simulator for responding to inputs provided thereto by the processor in response to actions of the participants and to inputs generated by the simulation to move the simulator in response thereto.

3. The real time interactive game of Claim 2 wherein each simulator further comprises:

a plurality of crew stations, each having a seat provided with means for initiating an electronic signal indicating the presence of an occupant therein.

4. The real time interactive game of Claim 3 wherein each simulator further comprises:

motion generating means coupled to the plurality of crew stations and controllable by a selected one of the crew stations to provide vibration, roll, pitch, lateral and vertical motion to the crew stations on command.

5. The real time interactive game of Claim 4 wherein each simulator further comprises:

simulator control means provided at one of the crew stations and positioned within reach of an occupant of the seat for selectively providing simulator control signals including turn, bank, fast, slow, stop, and reverse.

6. The real time interactive game of Claim 5 wherein each simulator further comprises:

armament control means provided at one of the crew stations and positioned within reach of an occupant of the seat for selectively providing arm and fire signals for simulated weapons.

7. The real time interactive game of Claim 6 wherein each simulator further comprises:

audio means at each of the crew stations for providing voice communications between occupants of the seats and for providing multi-channel stereophonic, surround sound audio sound effects to the occupants of the seats.

8. A real-time interactive, motion-based, video game simulation involving a plurality of participants, said game comprising:

a central processor;

a computer generated interactive video game simulation operatively coupled to the central processor and adapted for display by the simulation under control of the central processor;

an image projector coupled to the central processor for displaying video images in response to the computer generated video game simulation;

video display adapted to display the video image projected by the image projector;

a plurality of motion-based simulators coupled to the central processor that are adapted to interactively respond to the computer generated video game simulation and to actions of a plurality of participants that operate each of the simulators, each simulator comprising means for permitting the plurality of participants to individually and cooperatively interact with the video game simulation to achieve a predetermined objective, and wherein each of the participants independently affects the achievement of an objective; and

a plurality of motion control devices, each of said devices coupled to the processor and to a respective one of the simulators, for responding to inputs provided thereto by the central processor in response to actions of the participants and to inputs generated by the game simulation to move the simulators in response thereto.

9. The real time interactive game of Claim 8 wherein each simulator further comprises:

a plurality of crew stations, each having a seat provided with means for initiating an electronic signal indicating the presence of an occupant therein.

**10.** The real time interactive game of Claim 9 wherein each simulator further comprises:

motion generating means coupled to the plurality of crew stations and controllable by a selected one of the crew stations to provide vibration, roll, pitch, lateral and vertical motion to the crew stations on command.

**11.** The real time interactive game of Claim 10 wherein each simulator further comprises:

simulator control means provided at one of the crew stations and positioned within reach of an occupant of the seat for selectively providing simulator control signals including turn, bank, fast, slow, stop, and reverse.

**12.** The real time interactive game of Claim 11 wherein each simulator further comprises:

armament control means provided at one of the crew stations and positioned within reach of an occupant of the seat for selectively providing arm and fire signals for simulated weapons.

**13.** The real time interactive game of Claim 12 wherein each simulator further comprises:

audio means at each of the crew stations for providing voice communications between occupants of the seats and for providing audio sound effects to the occupants of the seats.

**14.** Simulator apparatus comprising:

first, second and third crew stations, each of the crew stations having a seat provided with means for initiating an electronic signal indicating the presence of an occupant therein;

game selection means operable by an occupant to select a desired game scenario;

motion generating means coupled to the seats of said first, second and third crew stations and controllable by the scenario selected by an occupant to provide vibration, roll, pitch, lateral and vertical motion to the seats of said crew stations on command of the central processing unit;

simulator control means provided at one of the crew stations and positioned within reach of an occupant of the seat for selectively providing simulator control signals including turn, bank, fast, slow, stop, and reverse;

armament control means provided at one of the crew stations and positioned within reach of an occupant of the seat for selectively providing arm and fire signals for simulated weapons;

audio means at each of the crew stations for providing voice communications between occupants of the seats and for providing multi-channel stereophonic, surround sound audio sound effects to the occupants of the seats;

an image generating system disposed in front of the crew stations for providing an interactive display viewable by the occupants of the seats; and

a central processing unit interconnecting the crew stations, the motion generating means, the vehicle control means, the armament control means, the audio means and the image generating system for providing a realistic, interactive, simulated battle experience to the occupants of the seats;

whereby when all of the seats at the crew stations are occupied, a first crew station becomes operable to provide simulator control signals; a second crew station becomes operable to provide navigation information to a first crew station; and a third crew station becomes operable to provide arm and fire armament control signals to simulated weapons;

and whereby navigation and target information is coupleable from the second and third crew stations to the first crew station during the simulated experience and which is used by the occupant of the first crew station to navigate the simulator apparatus, in response to information provided on the first crew station and viewable on the image generating system.

Fig. 1.

Fig. 2.

## Fig. 3.

Fig. 4.

EP 0 479 422 A2

VIDEO CONTROL 63

YOKE CONTROL 63

61

PROJECTOR

EVENT
RECORDER

71

RECORDER

63

13

25 25 25

TOKEN SCORE
CARD DISPENSER

72

24 24 24

17 18 19

73

21

22 23

14 15 16

SEAT MOTION

63

CENTRAL
PROCESSOR

62

SIMULATOR
MOTION
DEVICE

10

70

AUDIO 63

SIMULATOR MOTION 63

12